# EUROPÄISCHE PATENTSCHRIFT

(11) **EP 1 871 658 B1**
(45) Veröffentlichungstag und Bekanntmachung des Hinweises auf die Patenterteilung: **19.08.2009**
(21) Anmeldenummer: 06722819.7
(22) Anmeldetag: 15.04.2006
(51) Int. Cl.: B63C 11/48, F16M 11/42, B61B 7/00, A01K 61/00, G01N 1/04

(54) **INSPEKTIONSEINRICHTUNG FÜR UNTERWASSERSTRUKTUREN MIT EINER POSITIONIERVORRICHTUNG**
INSPECTION SYSTEM FOR UNDERWATER STRUCTURES AND HAVING A POSITIONING DEVICE
DISPOSITIF D'INSPECTION DE STRUCTURES SOUS-MARINES POURVU D'UN SYSTEME DE POSITIONNEMENT

(30) Priorität: 22.04.2005 DE 102005020070
(43) Veröffentlichungstag der Anmeldung: 02.01.2008
(73) Patentinhaber: Stiftung Alfred-Wegener-Institut für Polar- und Meeresforschung, 27570 Bremerhaven (DE)
(72) Erfinder: BUCK, Bela Hieronymus, 28213 Bremerhaven (DE); WUNSCH, Mark, 29525 Uelzen (DE)
(86) Internationale Anmeldenummer: PCT/DE2006/000701
(87) Internationale Veröffentlichungsnummer: WO 2006/111154

(56) Entgegenhaltungen:
- FR-A- 2 782 686
- GB-A- 2 123 369
- GB-A- 2 400 451
- US-A- 3 823 615
- US-A- 3 843 184
- US-A- 4 467 743
- US-A- 5 457 370
- US-B1- 6 295 867
- PATENT ABSTRACTS OF JAPAN Bd. 010, Nr. 254 (P-492), 30. August 1986 (1986-08-30) -& JP 61 082146 A (NIPPON ATOM IND GROUP CO LTD; others: 01), 25. April 1986 (1986-04-25) in der Anmeldung erwähnt
- PATENT ABSTRACTS OF JAPAN Bd. 1999, Nr. 05, 31. Mai 1999 (1999-05-31) -& JP 11 043045 A (MITSUBISHI HEAVY IND LTD), 16. Februar 1999 (1999-02-16)

## Beschreibung

Die Erfindung bezieht sich auf eine Inspektionseinrichtung für Unterwasserstrukturen mit einer Positioniervorrichtung, die eine stufenlos verstellbare Vertikalführung mit einer Teleskopstange und eine stufenlos verstellbare Horizontalführung mit einer einen Weg vorgebenden Führungsbahn und einem darauf auf Führungsrollen geführten Wagen zur Aufnahme der Vertikalführung aufweist, und mit einer Unterwasser-Videokamera als zumindest einem Inspektionsgerät, das an der Teleskopstange befestigt ist.

Derartige Inspektionseinrichtungen werden zum Beispiel zur Wartung groß angelegter Aquakulturanlagen benötigt, die weltweit zunehmend für die Produktion von Algen und Muscheln betrieben werden. Dabei wachsen die Kulturorganismen an oder in schwimmenden oder untergetauchten Systemen. Solche Systeme sind in der Regel Langleinen (Longline), Langröhren (Longtube), Ringsysteme, Flöße oder Pfahlbauten. Langleinen und Langröhren werden über einige 100 m Länge horizontal an der Wasseroberfläche oder in 1-10 m Tiefe unterhalb der Wasseroberfläche verspannt und dienen als Trägerleinen für die daran befestigten Kulturhalteleinen. An diesen Kulturhalteleinen werden schließlich die Algen oder Muscheln gezüchtet. Die Zucht solcher Kulturorganismen wird über mehrere Monate bis Jahre betrieben. Dabei wird neben Routinearbeiten (Kontrolle der Kulturen, Ausbringen von Organismen, Ernte) die technische Konstruktion auf ihren Zustand und ihre Sicherheit überprüft. Insbesondere die untergetauchten Strukturen müssen je nach Gewichtszunahme, die durch das Wachstum der Organismen entsteht, mit zusätzlichen Auftriebskörpern bestückt werden. Außerdem müssen die Kulturorganismen beobachtet werden, um den äußerlichen Zustand (Unversehrtheit, Ansiedlung), Wachstum, Prädation (Fressfeindschaft), Futteraufnahme und -konkurrenz bewerten zu können. Solche Aufgaben können von speziell ausgebildeten Tauchern durchgeführt werden. Eine weitere Möglichkeit besteht darin, die kompletten Strukturen mit Schiffskränen von Spezialschiffen anzuheben. Beide Möglichkeiten können nur bei geringem Seegang durchgeführt werden und sind sehr teuer. Außerdem können Unterwasserkamera-Systeme als Inspektionsgeräte zum Einsatz kommen. Andere Anwendungsgebiete für solche Inspektionseinrichtungen sind die Beobachtung und Wartung von technischen Einrichtungen unter Wasser wie Hafenanlagen usw.

### Stand der Technik

Aus der GB 2 400 451 A ist eine einfache Teleskopstange mit einer Anbaumöglichkeit für eine Unterwasserkamera bekannt. Die Länge der Stange wird vor dem Einsatz mit Verlängerungsstücken eingestellt. Die Leitungszuführung geschieht äußerlich entlang der Teleskopstange. Überschüssige Leitung wird auf eine Spule gerollt. Diese Einrichtung wird von einem Kai oder von einem Boot oder Ponton aus zur Beobachtung von z.B. Hafenanlagen unter der Wasseroberfläche eingesetzt. Ein Einsatz auf offener See bei Wind und Wellengang wird durch die Bewegungen der Kamera vor dem Objekt sehr erschwert. Aus Gewichtsgründen ist der Einsatz der handgeführten Einrichtung auf geringe Tiefen beschränkt. Aus der US 6,119,630 ist eine ortsfeste Inspektionseinrichtung für Unterwassereinsatz bekannt, die ursprünglich zur ständigen Beobachtung der Wachstumsverhältnisse von Muscheln unter natürlichen Umgebungsbedingungen vorgesehen ist. Die Einrichtung ist nach der Einstellung der Tiefe und der Wahl eines Einsatzortes weder in horizontaler noch in vertikaler Richtung veränderbar. Aus der JP 10020382 A ist ein halbautonomes Beobachtungssystem mit einem fernsteuerbaren unbemannten Boot und einer kabelversorgten Videoeinrichtung bekannt. Das Boot wird über einen zu beobachtenden Ort gesteuert und das Videosystem über eine Winsch auf die gewünschte Tiefe abgelassen. Bild und Steuersignale werden über das Kabel geleitet. Das Beobachtungssystem ist aufwändig und der Einsatzort auf die mögliche Kabellänge beschränkt. Es ist nicht klar, wie die Kamera ihre Blickrichtung beibehält, wenn sie am Kabel hängt und Strömungen und Wellengang ausgesetzt ist. Ein ähnliches System wird in der DE 103 10 550 A1 offenbart. Eine stromlinienförmige Unterwassereinheit wird von einem fernsteuerbaren unbemannten Boot in durch ein Kabel veränderbarer Tiefe durch ein Gewässer geführt und nimmt Daten mit Hilfe daran befestigter Sensoren auf. Das Beobachtungssystem ist aufwendig und der Einsatzort auf die mögliche Sichtstrecke beschränkt.

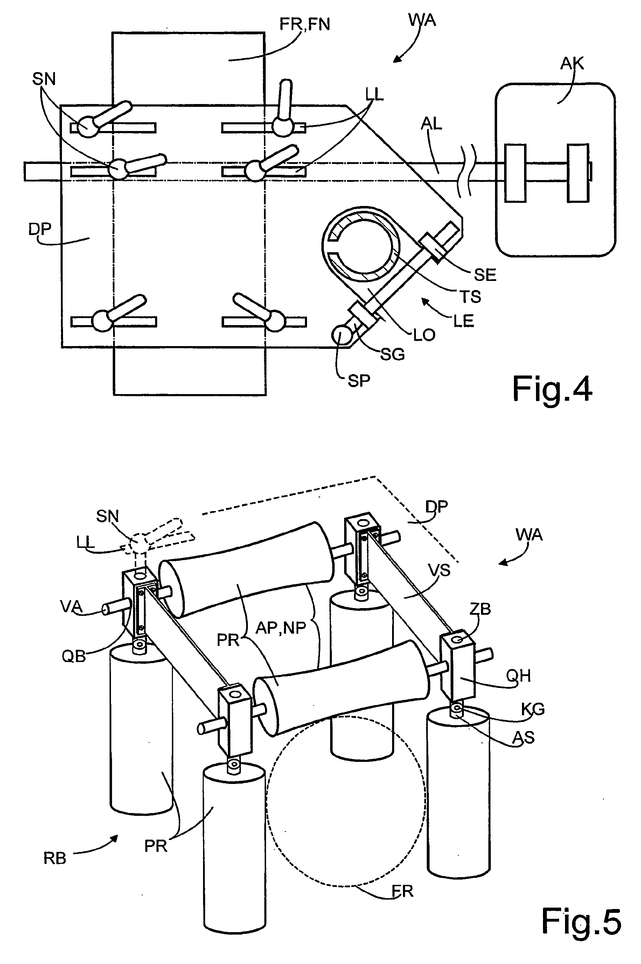

Aus der US 2 945 428 A ist eine Kamerastabilisierung bekannt, bei der der Kameramann eine Horizontalführung auf seinen Schultern trägt. Diese besteht aus zwei parallelen, geradlinigen Führungsschienen, die den horizontalen Verfahrweg der Kamera festlegen. Zur horizontalen Verschiebung ist die Kamera auf einem Wagen gelagert, der mit jeweils zumindest einer rohrförmig geschlossenen Führungsmuffe jede Führungsschiene umfasst. Eine vertikale Verstellung der Kamera kann über einen Teleskopstab erreicht werden, die unterhalb der Kamera an dem Wagen befestigt ist und sich am Boden abstützt (vergleiche Figur 5 ebenda). Ein kurvenförmiges Verfahren der Kamera ist mit dieser bekannten Kamerastabilisierung nicht ohne weiteres möglich. Weiterhin ist für die Stabilisierung immer der Bodenbezug (für Kameramann und Teleskopstange) erforderlich.

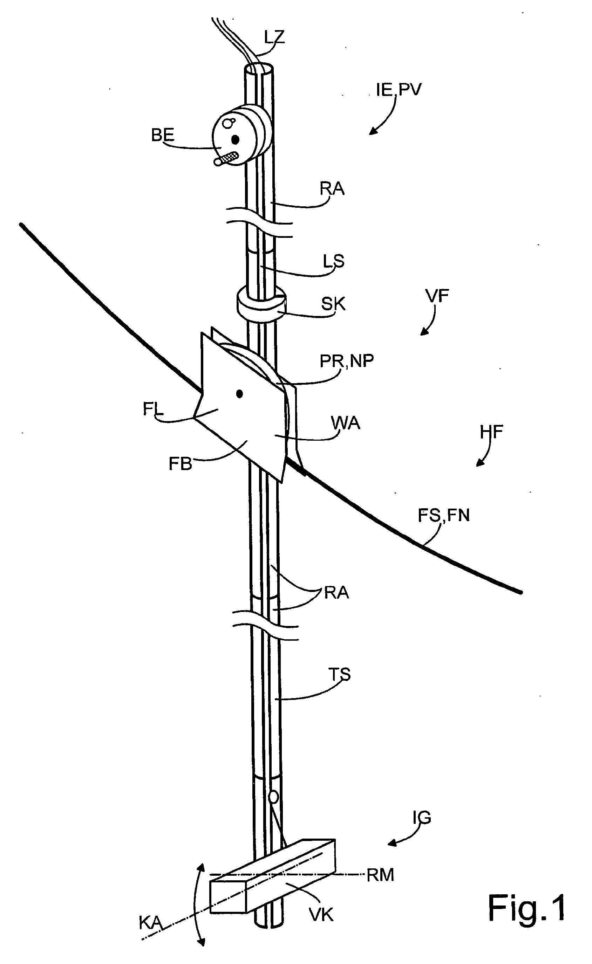

Weiterhin ist aus der WO 2004/008077 A1 ein optischer Enkoder, beispielsweise ein Röntgengerät, mit zwei relativ zueinander bewegbaren Geräteteilen bekannt. An dem einen Geräteteil ist ein Positionsanzeiger, an dem anderen Geräteteil ein Bildaufnehmer befestigt. Der Positionsanzeiger ist mit einem sich bewegenden Objekt verbunden und wird von dem Bildaufnehmer in seiner Bewegung optisch erfasst. Der Enkoder umfasst einen verschiebbaren Wagen, der unterhalb einer Horizontalführung über vier Führungsrollen mit dieser verbunden ist (vergleiche Figur 1 ebenda). Dabei bedingt die Anordnung der vier Rollen eine bauliche Sicherung. Weiterhin ist am Wagen eine teleskopartige Vertikalführung aus mehreren ineinander schiebbaren Vierkantrohren vorgesehen, die beim Ausfahren starke Absätze zueinander aufweisen..

Die JP 61082146 A, von der die vorliegende Erfindung als nächstliegendem Stand der Technik ausgeht, beschreibt ein über eine Winde betätigbares Teleskoprohr definierter Ausfahrlänge mit einer daran befestigten Unterwasser-Videokamera. Die Beobachtungstiefe wird mittels einer Handkurbel an der Winde eingestellt. Das Teleskoprohr kann mit einem Schlitten in horizontaler Richtung auf einem Ausleger von Hand verschoben werden. Der Ausleger kann an zwei Scharnieren um einen Tragmast ebenfalls von Hand gedreht werden. Die horizontale Bewegung ist also in zwei Raumrichtungen kontinuierlich, wobei in der einen Raumrichtung ausschließlich eine reine Kreisbewegung und in der anderen Raumrichtung eine lineare Bewegung durchgeführt werden kann. Die Bewegung des Schlittens kann nur linear entlang des Auslegers erfolgen. Der Einsatz der Kamera ist durch die Kombination dieser Bewegungen auf eine Kreisscheibe mit dem Radius des Auslegers und in der Tiefe auf die Ausfahrlänge des Teleskoprohrs beschränkt. Es wird also ein in Radius und Länge bestimmter, zylinderförmig begrenzter Beobachtungsraum zur Verfügung gestellt.

### Aufgabenstellung

Die **Aufgabe** für die vorliegende Erfindung ist darin zu sehen, dass eine Inspektionseinrichtung für Unterwasserstrukturen mit einer Positioniervorrichtung der eingangs beschriebenen Art zur Verfügung gestellt wird, die einen weitgehend unbegrenzten Beobachtungsraum zur Verfügung stellt, preiswert herstellbar und ohne Spezialpersonal leicht handhabbar ist. Die erfindungsgemäße **Lösung** für diese Aufgabe ist dem Hauptanspruch zu entnehmen. Vorteilhafte Weiterbildungen der erfindungsgemäßen Inspektionseinrichtung sind in den Unteransprüchen aufgezeigt und werden im Folgenden im Zusammenhang mit der Erfindung näher erläutert.

Die erfindungsgemäße Inspektionseinrichtung besteht aus einer Horizontal- und einer Vertikalführung, die eine Ebene aufspannen, in der die Inspektionsgeräte kontinuierlich verfahren werden können. Die Vertikalführung weist eine rohrförmigen Teleskopstange auf und verläuft daher immer linear, die Horizontalführung kann eine Führungsbahn in der Ebene aufweisen, die senkrecht auf der Vertikalführung steht, Kurven beschreiben, bevorzugt aber aus linearen Abschnitten und besonders bevorzugt aus einem einzigen linearen Abschnitt bestehen kann. Die von der Horizontal- und der Vertikalführung aufgespannte Fläche kann also eben sein oder aus einer beliebigen Anzahl von in Winkeln zueinander stehenden Flächenabschnitten bestehen oder eine in der dritten Raumrichtung gekrümmte Fläche, zum Beispiel also ein Zylinder mit kreisförmigem Querschnitt sein. Zur Tiefeneinstellung des Inspektionsbereichs kann die Teleskopstange durch Hinzufügen oder Entfernen von Rohrabschnitten absatzfrei verlängert oder verkürzt werden. Die Teleskopstange wird von einer Leitvorrichtung an einem Wagen aufgenommen, der mittels einer Führungsrolle über die Führungsbahn der Horizontalführung greift und auf dieser abrollt. Dazu weist die Führungsrolle ein das Profil der Führungsbahn zumindest teilweise aufnehmendes Negativprofil auf. Die Inspektionsgeräte sind bevorzugt am unteren Ende der Teleskopstange angeordnet. Die Einstellung der jeweils gewählten Einsatztiefe der Inspektionsgeräte an der Teleskopstange, die kontinuierliche Führung des Wagens mit der Teleskopstange und den Inspektionsgeräten über die Horizontalführung sowie die gegebenenfalls möglichen Bedienungen der Inspektionsgeräte geschehen bevorzugt im Handbetrieb.

Die zur Versorgung und Bedienung der Inspektionsgeräte erforderlichen Leitungszüge zur Energiezufuhr, gegebenenfalls zur Bereitstellung von Signalen wie Bild- und Steuerdaten in beiden Richtungen und zur mechanischen Betätigung können zum Schutz vor mechanischer Beschädigung im Inneren der Teleskopstange untergebracht werden. Dazu ist diese bevorzugt als Rohr mit Längsschlitz ausgeführt, so dass auch eine Längenänderung der Teleskopstange durch Hinzufügen oder Entfernen von geschlitzten Rohrabschnitten sehr schnell vonstatten geht, ohne alle Leitungszüge entfernen und nach der Längenänderung wieder einfädeln zu müssen. Leitungszüge werden von einem Vorrat ab- oder auf ihn aufgewickelt und der geschlitzte Rohrabschnitt darüber geschoben oder davon abgezogen. Zur Längenänderung hat der Rohrabschnitt eine Rasteinrichtung, die dafür sorgt, dass er schnell und in Bezug auf den Längsschlitz passgenau mit dem vorhandenen Teleskoprohr verbunden, beziehungsweise auf einfache Weise davon entkoppelt und entfernt werden kann. Die Rohrabschnitte der Teleskopstange können an dem einen Ende bei konstantem Außendurchmesser auf einem Teilbereich der ungefähren Länge des Durchmessers des Teleskoprohres einen vergrößerten Innendurchmesser und auf dem anderen Ende auf einem gleichlangen Teilbereich bei konstantem Innendurchmesser einen derart verkleinerten Außendurchmesser aufweisen, dass die einen Enden der Rohrabschnitte gerade spielarm die anderen Enden weiterer Rohrabschnitte absatzfrei aufnehmen können. Die Rasteinrichtung kann bevorzugt aus zumindest einer federnden Zunge mit einer Rastnase bestehen, die im Inneren jedes Rohrabschnitts an dem anderen Ende mit verringertem Außendurchmesser angeordnet ist, wobei die Rastnase bei bezüglich des Längsschlitzes passgenauer Übereinanderstellung der ineinander greifenden Rohrabschnitte von innen nach außen genau durch dann ebenfalls übereinander stehende Bohrungen in den beiden, einen Verbindungsbereich bildenden Teilbereiche der ineinander greifenden Rohrabschnitte greift und diese fest miteinander verbindet. Durch Drücken auf die nicht weiter hervorstehende Rastnase der zumindest einen federnden Zunge und gleichzeitigem Auseinanderziehen der beiden angrenzenden Rohrabschnitte kann die Verbindung sehr einfach und ohne Werkzeug wieder gelöst werden.

Die den Weg vorgebende Führungsbahn der Horizontalführung kann ein gespanntes Führungsseil sein, das aus einem einzelnen linearen Seilabschnitt oder einer beliebigen Anzahl von unter kleinen Winkeln aneinander angrenzenden Seilabschnitten besteht. Die Variante aus mehreren Seilabschnitten kann damit eine quasikontinuierliche Kurve beschreiben, die von dem Wagen abgefahren werden kann. Der Wagen für eine Horizontalführung aus einem gespannten Führungsseil wird von einem Führungsbereich aus zwei dicht beieinander stehenden flächigen Führungslaschen gebildet, zwischen denen die Führungsrollen frei drehbar eingespannt sind. Die Führungsrollen sind an ihrem Umfang eingekerbt und am Grund der umlaufenden Kerbe derart profiliert, dass sie reibungsarm aber eng geführt über das gespannte Führungsseil laufen können. Für verschiedene Durchmesser des Führungsseils kann die Kerbe ein stufig angepasstes Profil aufweisen, wobei Breite und Höhe der Stufen von der Achse der Führungsrolle aus nach außen hin zunehmen. Die bei einem gewählten Durchmesser des Führungsseils jeweils nicht benutzten kleineren Stufen können durch eine am Grund der zu benutzenden Stufe umlaufende Manschette abgedeckt werden, wodurch ein Verklemmen des Führungsseils in der nächst kleineren Stufe vermieden wird.

Zum sichereren Abfahren des Führungsseils können die flächigen Führungslaschen des Wagens einen nach unten verlängerten und sich dabei ab der Unterkante der Führungsrolle leicht erweiternden Führungsbereich aufweisen, wodurch einerseits das Aufsetzen des Wagens auf das Führungsseil erleichtert und andererseits ein Abspringen des Wagens von dem Führungsseil bei heftigeren Bewegungen verhindert wird. Die den Weg vorgebende Führungsbahn der Horizontalführung kann auch ein in der horizontalen Ebene beliebig geformtes Führungsrohr, bevorzugt mit kreisförmigem Querschnitt sein. In diesem Fall wird der Wagen von zumindest zwei Paaren senkrecht links und rechts des Führungsrohrs und zumindest einem Paar waagerecht über dem Führungsrohr angeordneter, an den Durchmesser des Führungsrohrs zumindest teilweise angepasster konkav profilierter, walzenartig verbreiterter Führungsrollen, die gemeinsam an einer Deckplatte befestigt sind, gestützt und geführt. Das Profil insbesondere der oberen walzenartigen Führungsrollen ist dabei nur so stark ausgeprägt, dass sie gerade auf das Führungsrohr mit dem größten Durchmesser passt und dient im Wesentlichen der Lastverteilung des an dem Wagen hängenden Teleskoprohrs mit den Inspektionsgeräten. Es nimmt als Negativprofil zumindest teilweise das Profil des Führungsrohrs auf. Die seitlichen walzenartigen Führungsrollen müssen nicht konkav profiliert sein, da sie keine Last aufnehmen und nur die seitlichen Führungskräfte übertragen müssen. Zur Anpassung des Wagens an verschiedene Durchmesser des Führungsrohrs können die seitlichen walzenartigen Führungsrollen mit Schnellspannern in der Deckplatte verschiebbar angeordnet und fixierbar sein. Nicht profilierte seitliche Führungsrollen müssen dazu nicht in der Höhe verstellbar sein, da sie sich durch ihre gerade Berandung an jeden Durchmesser des Führungsrohrs anlegen. Die Achsen der seitlichen Führungsrollen können unterhalb der Deckplatte ein Gelenk mit einer Rückholfeder aufweisen, mit dem sie sich unterschiedlichen Rohrabmessungen und / oder Unebenheiten der Rohroberfläche anpassen können.

Das Teleskoprohr kann durch eine Leiteinrichtung mit dem auf der Horizontalführung bewegbaren Wagen verbunden sein. Diese kann aus einer Leitöffnung in der Deckplatte des Wagens bestehen, in die das Teleskoprohr durch Öffnen schnell seitlich eingesetzt und nach dem Wiederverschließen gegen Herausfallen gesichert werden kann. Durch das seitliche Einsetzen wird vermieden, das Teleskoprohr mit seinen Inspektionsgeräten und Leitungszügen von unten oder oben durch die Leitöffnung einfädeln zu müssen. Die geschlossene Leitöffnung umfasst die Teleskopstange derart, dass sie darin gleiten kann. Oberhalb der Leitöffnung kann ein Schnellspannring in beliebiger Höhe die Teleskopstange umfassen und damit die maximale Einsatztiefe der Inspektionsgeräte festlegen und die Teleskopstange am Herausrutschen nach unten sichern. Die Teleskopstange kann von Hand auf und ab bewegt und gedreht werden, wobei die Bewegung oben von dem Schnellspannring und unten von den Inspektionsgeräten begrenzt wird. Im Falle des Führungsrohrs, bei dem der Wagen mit einer Deckplatte mit walzenartigen Führungsrollen ausgeführt ist, kann die Leitöffnung ein einfacher Ausschnitt in der Deckplatte sein, die durch einen Sperrriegel geöffnet und verschlossen werden kann. Im Falle eines Führungsseils, bei dem der Wagen mit zwei seitlichen Führungslaschen mit den Führungsrollen dazwischen ausgeführt ist, kann die Leitöffnung aus einem das Teleskoprohr umfassenden geschlitzten Leitflansch bestehen, dessen Schenkel durch eine Schraube geöffnet und geschlossen werden. Der geschlitzte Leitflansch kann über ein einfaches Drehgelenk und einen starren Abstandhalter mit dem Wagen verbunden sein. Das Drehgelenk dient dem Ausgleich der gegenüber dem gerade in die Tiefe ragenden Teleskoprohr gegebenenfalls durch Unebenheiten in der Horizontalführung an einem Wagen mit mehr als einer Führungsrolle auftretenden kleinen Kippbewegungen. Da ein fest mit einem solchen Wagen verbundenes Teleskoprohr diesen Kippbewegungen aufgrund seiner Hebellänge und seines Gewichts nicht folgen könnte, würde bei Abwesenheit des Drehgelenks jeweils eine Führungsrolle mehr oder weniger weit von der Horizontalführung abheben und eine ungenaue Seitenführung bedingen. Der starre Abstandhalter verhindert die Reibung des drehbar gelagerten Teleskoprohrs an dem Wagen und sorgt für einen Mindestabstand zwischen der Teleskopstange mit den Inspektionsgeräten und der zu inspizierenden Oberfläche um beispielsweise einen zur Beobachtung ausreichenden Mindestabstand der Videokamera zu gewährleisten. Das Teleskoprohr sitzt in seiner Leitöffnung seitlich am Wagen wodurch sich ein Hebel zwischen dem Angriffspunkt des Gewichts der Teleskopstange und dem Auflage- und Drehpunkt des Wagens auf dem Führungsseil oder dem Führungsrohr ergibt. Um eine Schiefstellung des Teleskoprohrs im Wasser zu verhindern, kann zur Kompensation des Gewichts der Teleskopstange zumindest ein Auftriebskörper an einem längenveränderbaren Ausleger angeordnet sein, der mit dem Wagen in der gewählten Längeneinstellung fest verbunden ist. Auslegerlänge und Auftriebskraft werden dabei so hergestellt, dass das Gewicht der Teleskopstange gerade bis zu ihrer genau vertikalen Stellung kompensiert wird.

Als Inspektionsgerät ist zumindest eine Unterwasser-Videokamera vorgesehen. Diese kann in einem Gehäuse untergebracht sein, das von der Wasseroberfläche aus zumindest um die horizontale, einen rechten Winkel mit der optischen Kameraachse bildende Raumachse um zumindest ± 90° geschwenkt werden kann. Zusammen mit der seitlichen Verdrehmöglichkeit des gesamten Teleskoprohrs ist es möglich, einen Überblick über einen jeweils ganzen, relativ breiten vertikalen Abschnitt des Inspektionsobjekts zu erhalten, vor dem die Kamera gerade steht. Als weiteres Inspektionsgerät kann eine mit einem Saugschlauch versehene Ansaugvorrichtung für Wasserproben und kleine Organismen an der Teleskopstange in Höhe der Unterwasser-Videokamera montiert sein. Durch eine kleine Pumpe können Proben von Wasser und Schwebstoffen vom Beobachtungsort abgesaugt und bevorratet werden. Ein weiteres Inspektionsgerät kann eine Entnahmevorrichtung für Festkörperproben sein und einen Aufnahmekorb aufweisen, in den Festkörperproben vom Beobachtungsort untergebracht werden können. Dazu kann die Korbhalterung vorteilhaft mit scharfen Kanten versehen sein, so dass durch entsprechende Bewegungen der Teleskopstange Festkörperproben, z.B. Muscheln, vom beobachteten Untergrund abgekratzt werden und in den Aufnahmekorb fallen können. Eine andere Entnahmevorrichtung für Festkörperproben kann eine Trennvorrichtung für Festkörperproben aufweisen, die als mechanisch betätigbare Säge, Zange oder Messer ausgebildet ist. Eine weitere Ausführung einer Inspektionseinrichtung als Entnahmevorrichtung von Festkörperproben kann neben einem Aufnahmekorb einen mechanisch betätigbaren Greifer aufweisen, mit dem Festkörperproben vom beobachteten Untergrund aufgenommen und in den Aufnahmekorb befördert werden können. Darüber hinaus kann als weiteres Inspektionsgerät eine Vermessungsvorrichtung mit der Kamera an der Teleskopstange montiert sein, die vorteilhaft aus zwei in definiertem Abstand und exakt parallel zueinander angeordneten Lasern bestehen kann. Bei der Beobachtung der Unterwasserstrukturen kann durch Relation zwischen den Auftreffpunkten des Laserlichts und deren bekanntem Abstand auf die Größe der beobachteten Strukturen, z.B. Organismen, geschlossen werden.

Zur Bedienung der mechanisch betätigbaren Inspektionsgeräte können Bowdenzüge verwendet werden, mit deren Hilfe die notwendigen Bewegungen in der Tiefe von der Wasseroberfläche aus durchgeführt werden können. Die Bowdenzüge können mit Hebeln oder Drehelementen als Bedienungseinrichtungen in eine gewünschte Position gebracht und dort in Raststellungen fixiert werden. Beim Lösen der Rasten können die bewegbaren Inspektionsgeräte mittels Rückholfedern in eine Ausgangsstellung zurückbewegt werden. Die Drehelemente können gleichzeitig einen zur Verlängerung der Teleskopstange mittels geschlitzten Rohrabschnitten einen Drahtvorrat aufnehmen, der bei Bedarf einfach auf- oder abgewickelt werden kann.

### Ausführungsbeispiele

**Ausbildungsformen** der Inspektionseinrichtung für Unterwasserstrukturen mit einer Positioniervorrichtung nach der Erfindung werden nachfolgend zum weiteren Verständnis der Erfindung anhand der schematischen Figuren näher erläutert. Dabei zeigt
- **Figur 1**: eine Inspektionseinrichtung mit Positioniervorrichtung und Inspektionsgeräten mit Führungsseil,
- **Figur 2**: einen Wagen mit profilierter Rolle und Leiteinrichtung,
- **Figur 3**: eine Inspektionseinrichtung mit Positioniervorrichtung und Inspektionsgeräten mit Führungsrohr,
- **Figur 4**: einen Wagen mit Deckplatte mit Leiteinrichtung,
- **Figur 5**: walzenartige Führungsrollen im Aufbau,
- **Figur 6**: Rohrabschnitte der Teleskopstange mit Rastnasen,
- **Figur 7**: ein Führungsrohr als Kreis,
- **Figur 8**: ein Führungsseil mit Abschnitten,
- **Figur 9**: eine Teleskopstange mit Inspektionsgeräten und
- **Figur 10**: eine Bedieneinheit für Bowdenzüge.

**Figur 1** zeigt eine Inspektionseinrichtung **IE** mit Positioniervorrichtung **PV,** Inspektionsgeräten **IG** und Horizontalführung **HF** mit Führungsseil **FS.** Die Vertikalführung **VF** mit Teleskopstange **TS** aus mehreren Rohrabschnitten **RA** wird in einer hier nicht sichtbaren Leiteinrichtung **LE** am Wagen **WA** auf- und abführbar sowie drehbar aufgenommen. Ein Schnellklemmring **SK** begrenzt dabei den möglichen Hub der Teleskopstange **TS** und legt die maximale Eintauchtiefe fest. Die Teleskopstange **TS** weist einen durchgängigen Längsschlitz **LS** zur Aufnahme von Leitungszügen **LZ** zur elektrischen Versorgung und zur mechanischen Bedienung der Inspektionsgeräte **IG,** in Figur 1 einer Videokamera **VK,** auf. Die Bedienungseinrichtung **BE** zur mechanischen Verstellung der Videokamera **VK** kann in hier nicht weiter dargestellten Raststellungen fixiert werden. Der Wagen **WA** in dieser Ausführung ist mit einer profilierten Führungsrolle **PR** ausgerüstet, die auf dem Führungsseil **FS** abrollt, ein das Profil des Führungsseils **FS** aufgreifendes Negativprofil **NP** und einen nach unten verlängerten und sich aufweitenden Führungsbereich **FB** aufweist. Die Videokamera **VK** kann zumindest um die horizontale, einen rechten Winkel mit der optischen Kameraachse **KA** bildende Raumachse **RM** schwenken.

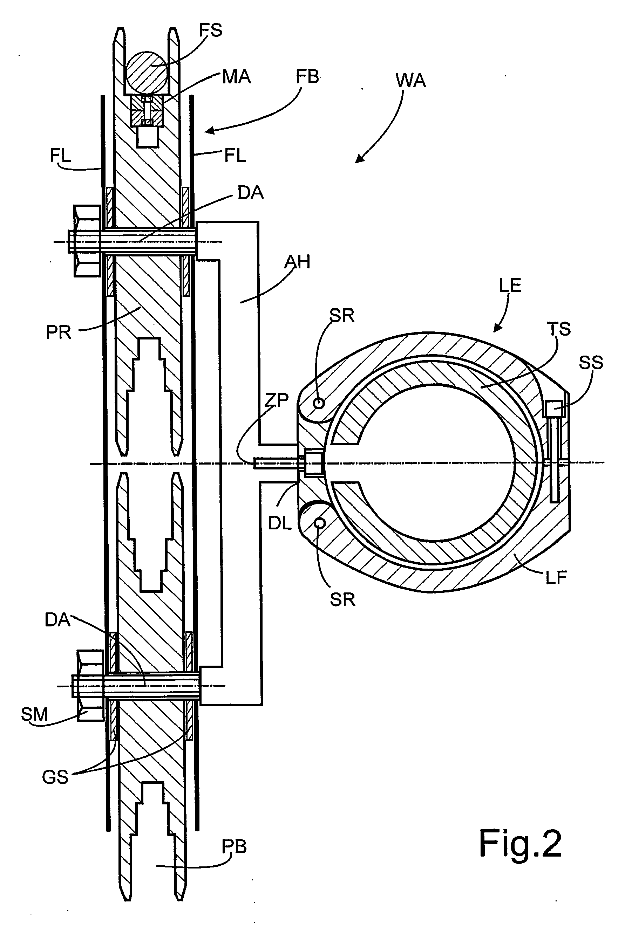

**Figur 2** zeigt einen Wagen **WA** mit zwei profilierten Führungsrollen **PR** und Leiteinrichtung **LE.** Die profilierten Führungsrollen **PR** zeigen den an verschiedene Seildurchmesser in Stufen angepassten Profilbereich **PB.** Das bei der gewählten Darstellung in der Zeichnungsebene verlaufende Führungsseil **FS** ist zur Verdeutlichung im Querschnitt im oberen Profilbereich **PB** dargestellt. Die jeweils unbenutzten kleineren Stufen können durch Manschetten **MA** abgedeckt werden, um ein Verklemmen des Führungsseils **FS** zu verhindern. Die Manschette **MA** kann in die nächstkleinere Stufe füllend eingelegt und an ihren verjüngten Enden zum Ring verschraubt werden. Die profilierten Führungsrollen **PR** werden von dem Führungsbereich **FB** aus zwei ebenen Führungslaschen **FL** zusammengefasst und zwischen ihnen leicht drehbar auf Drehachsen **DA** gehalten und mit Sicherungsmuttern **SM** gesichert. Gleitscheiben **GS** zwischen den Führungslaschen **FL** und den profilierten Führungsrollen **PR** sorgen für den reibungsarmen Lauf. Die Drehachsen **DA** werden von einem gemeinsamen Abstandhalter **AH** getragen, der an seinem zentralen Punkt **ZP** die Leiteinrichtung **LE** für die Teleskopstange **TS** in einem Drehlager **DL** trägt. Die Leiteinrichtung **LE** besteht in diesem Ausführungsbeispiel aus einem über Scharniere **SR** aufklappbaren Leitflansch **LF,** der im durch eine Sicherungsschraube **SS** geschlossenen Zustand die Teleskopstange **TS** hält, ihr aber zur Drehung und Auf- und Abbewegung genügend Spielraum lässt.

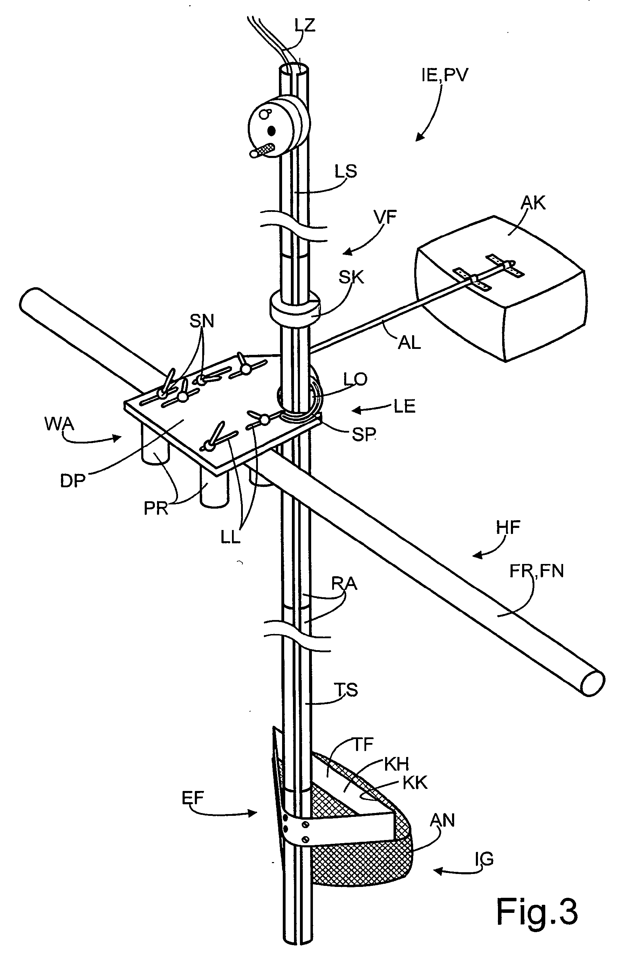

**Figur 3** zeigt eine Inspektionseinrichtung **IE** mit Positioniervorrichtung **PV,** Inspektionsgeräten **IG** und Horizontalführung **HF** mit Führungsrohr **FR** als Führungsbahn **FN.** Die Vertikalführung **VF** mit Teleskopstange **TS** aus mehreren Rohrabschnitten **RA** wird in einer Leiteinrichtung **LE** am mit Deckplatte **DP** ausgerüsteten Wagen **WA** auf- und abführbar sowie drehbar aufgenommen. Die Leiteinrichtung **LE** besteht in diesem Ausführungsbeispiel aus einer Leitöffnung **LO,** die den Querschnitt der Teleskopstange **TS** mit Spiel aufnehmen kann, und einem als drehbarer, offener Ring ausgelegten Sperrriegel **SP.** Ein Schnellklemmring **SK** begrenzt dabei den möglichen Hub der Teleskopstange **TS** und legt die maximale Eintauchtiefe fest. Die Teleskopstange **TS** weist einen durchgängigen Längsschlitz **LS** zur Aufnahme von Leitungszügen **LZ** auf. Ein hier dargestelltes Inspektionsgerät **IG** ist eine Entnahmevorrichtung für Festkörperproben **EF** und besteht aus einem Aufnahmekorb **AN** mit Korbhalterung **KH** mit schneidenartig ausgebildeter Kante **KK** als Trennvorrichtung für Festkörperproben **TF.** Der mit Deckplatte **DP** ausgerüstete Wagen **WA** in diesem Ausführungsbeispiel ist mit zwei Paaren senkrecht links und rechts des Führungsrohrs **FR** und zumindest einem Paar waagerecht über dem Führungsrohr **FR** angeordneter, an den Durchmesser des Führungsrohrs **FR** zumindest teilweise angepasster konkav profilierter, walzenartig verbreiterter Führungsrollen **PR** ausgerüstet, die auf dem Führungsrohr **FR** abrollen. Die Führungsrollen **PR** können über Schnellspanner **SN** und Langlöcher **LL** auf dem jeweiligen Durchmesser des Führungsrohrs angepassten Positionen fixiert werden. Im Falle des mit Deckplatte **DP** ausgerüsteten Wagens **WA** wird das seitlich an dem Wagen **WA** angreifende Gewicht der Teleskopstange **TS** und der daran fixierten Inspektionsgeräte **IG** durch einen an einem Ausleger **AL** an der dem Führungsrohr **FR** abgewandten Seite des Wagens **WA** angeordneten Auftriebskörper **AK** kompensiert. Der Ausleger **AL** wird ebenfalls über Schnellspanner **SN** und Langlöcher **LL** an der Deckplatte **DP** einstellbar fixiert.

**Figur 4** zeigt einen mit Deckplatte **DP** ausgerüsteten Wagen **WA** und eine Leiteinrichtung **LE** in der Draufsicht. Die Teleskopstange **TS** wird darin auf- und abführbar sowie drehbar aufgenommen. Die Leiteinrichtung **LE** besteht in diesem Ausführungsbeispiel aus einer Leitöffnung **LO,** die den Querschnitt der Teleskopstange **TS** mit Spiel aufnehmen kann, und einem als Stange mit Griffknopf **SG** ausgebildeten und durch zwei Schellen **SE** gehaltenen Sperrriegel **SP.** Die unterhalb der Deckplatte **DP** angeordneten und in dieser Darstellung nicht sichtbaren Führungsrollen **PR** können über Schnellspanner **SN** und Langlöcher **LL** auf dem jeweiligen Durchmesser des Führungsrohrs angepassten Positionen fixiert werden. Der der Gewichtskompensation dienende Ausleger **AL** mit dem Auftriebskörper **AK** ist an der dem Führungsrohr **FR** als Führungsbahn **FN** abgewandten Seite des Wagens **WA** angeordnet. Der Ausleger **AL** wird über Schnellspanner **SN** und Langlöcher **LL** an der Deckplatte **DP** einstellbar fixiert.

**Figur 5** zeigt die walzenartige Führungsrollen **PR** in einem rahmenartigen Aufbau **RB.** Dabei werden die waagerecht angeordneten Führungsrollen **PR** mit einem an den größten möglichen Durchmesser des Führungsrohrs **FR** zumindest teilweise angepassten Profil **AP** als Negativprofil **NP** des Führungsrohrs **FR** versehen, mit dessen Hilfe sich der ganze Wagen **WA** auf dem Führungsrohr **FR** zentriert. Die vertikal angeordneten Führungsrollen **PR** erhalten kein Profil, sondern werden nur in ihrer Länge für den größten möglichen Durchmesser des Führungsrohrs **FR** ausgelegt. Dadurch besteht keine Notwendigkeit der Höhenanpassung der vertikal angeordneten Führungsrollen **PR** bei Änderung des Durchmessers des Führungsrohrs **FR.**

Die vertikal angeordneten Führungsrollen **PR** sind mit Achsen **AS** drehbar in je einer quaderförmigen Halterung **QH** angeordnet, von denen jeweils zwei über verschraubbare Streben **VS** miteinander verbunden sind. Die beiden dadurch entstehenden verbundenen Paare von vertikal angeordneten Führungsrollen **PR** sind über die beiden profilierten, horizontal angeordneten Führungsrollen **PR** verbunden, indem deren verlängerte Achsen **VA** in Querbohrungen **QB** je einer der beiden zugehörigen quaderförmigen Halterungen **QH** stecken. Die quaderförmigen Halterungen **QH** weisen zentrale vertikale Bohrungen **ZB** auf, über die der rahmenartige Aufbau **RB** insgesamt mittels der Schnellspanner **SN** und der Langlöcher **LL** an der Deckplatte **DP** fixiert wird. Die Achsen **AS** der vertikalen Führungsrollen **PR** können zur Unterstützung der Anpassung an den Durchmesser des Führungsrohrs **FR** oder zum Ausgleich von darauf befindlichen Unebenheiten Knickgelenke **KG** aufweisen. Zur Anpassung des Wagens **WA** an den Durchmessers des Führungsrohrs **FR** werden die Schnellspanner **SN** gelöst , der Wagen **WA** über das Führungsrohr **FR** gesetzt und die beiden verbundenen Paare von vertikal angeordneten Führungsrollen **PR** über die Langlöcher **LL** an das Führungsrohr **FR** herangeschoben. Die horizontalen Führungsrollen **PR** mit dem angepassten Profil **AP** können sich dabei durch die in den Querbohrungen **QB** der quaderförmigen Halterungen **QH** steckenden verlängerten Achsen **VA** solange verschieben, bis sie zentral auf dem Führungsrohr **FR** angeordnet sind. Anschließend werden die Schnellspanner **SN** wieder befestigt.

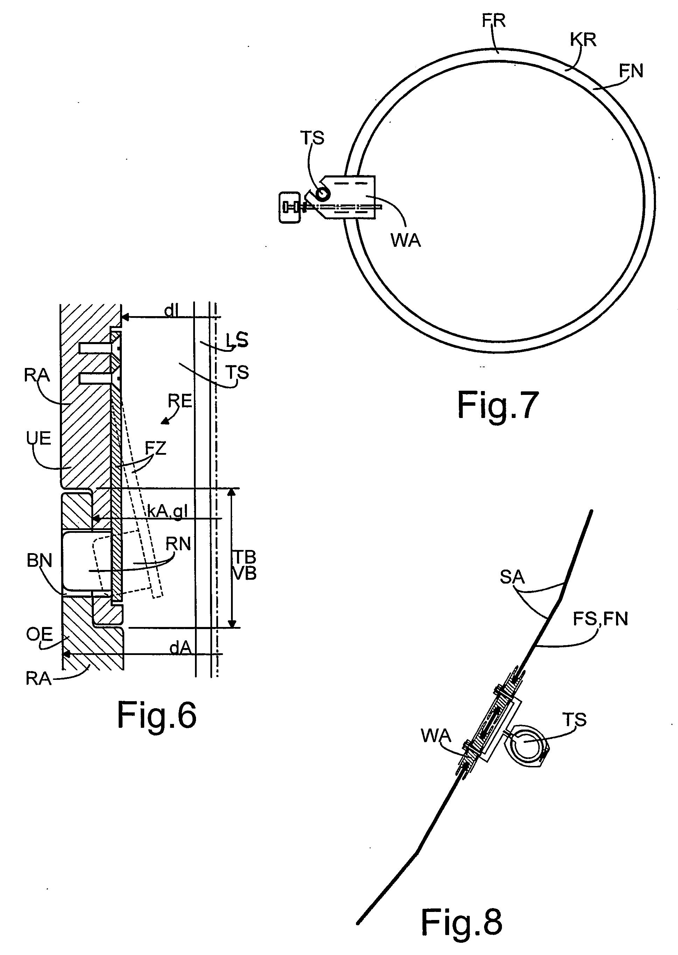

**Figur 6** zeigt zwei Rohrabschnitte **RA** der Teleskopstange **TS,** von denen der eine am oberen Ende **OE** bei konstantem Außendurchmesser **dA** auf einem Teilbereich **TB** der ungefähren Länge des Durchmessers der Teleskopstange **TS** einen vergrößerten Innendurchmesser **gI** und der andere am unteren Ende **UE** auf einem gleichlangen Teilbereich **TB** bei konstantem Innendurchmesser **dI** einen derart verkleinerten Außendurchmesser **kA** aufweist, dass die beiden Enden **OE,UE** der dargestellten Rohrabschnitte **RA** einander gerade spielarm absatzfrei aufnehmen können. Die Rasteinrichtung **RE** besteht aus zumindest einer federnden Zunge **FZ** mit einer Rastnase **RN,** die im Inneren des oberen Rohrabschnitts **RA** an dem unteren Ende **UE** mit verkleinertem Außendurchmesser **kA** angeordnet ist, wobei die Rastnase **RN** bei bezüglich des Längsschlitzes **LS** passgenauer Übereinanderstellung der ineinander greifenden Rohrabschnitte **RA** von innen nach außen genau durch dann ebenfalls übereinander stehende Bohrungen **BN** in den beiden, einen Verbindungsbereich **VB** bildenden Teilbereiche der ineinander greifenden Rohrabschnitte **RA** greift und diese fest miteinander verbindet. Durch Drücken auf die außen nicht weiter hervorstehende Rastnase **RN** der zumindest einen federnden Zunge **FZ** und gleichzeitiges Auseinanderziehen der beiden angrenzenden Rohrabschnitte **RA** kann die Verbindung sehr einfach und ohne Werkzeug wieder gelöst werden. Die Rasteinrichtung **RE** ist in der geöffneten Stellung zusätzlich gestrichelt dargestellt.

**Figur 7** zeigt ein Führungsrohr **FR** als Führungsbahn **FN,** das als Kreis **KR** ausgebildet ist. Der Wagen **WA** läuft auf dem Führungsrohr **FR** um und führt dabei die Teleskopstange **TS** mit sich. Mit diesem Aufbau können zylinderartige Unterwasserstrukturen inspiziert werden.

**Figur 8** zeigt ein Führungsseil **FS** als Führungsbahn **FN,** das unter Bildung kleiner Winkel in zusammenhängende Seilabschnitte **SA** eingeteilt ist. Der Wagen **WA** läuft auf dem Führungsseil **FS** und führt dabei die Teleskopstange **TS** mit sich. Mit diesem Aufbau können quasi kurvig geformte Unterwasserstrukturen inspiziert werden.

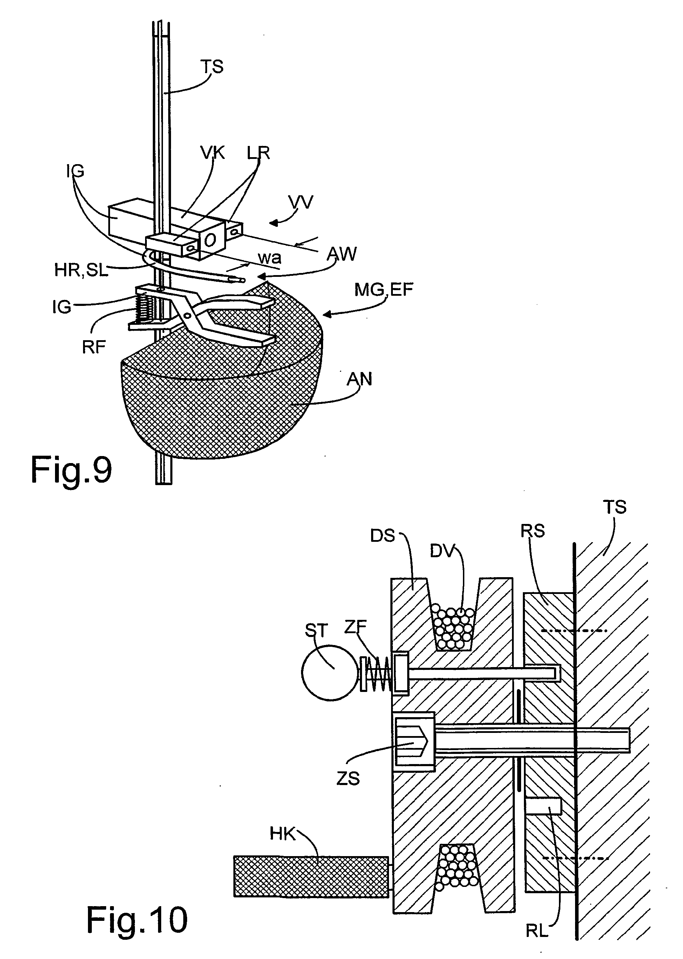

**Figur 9** zeigt eine Teleskopstange **TS** mit Inspektionsgeräten **IG,** hier insbesondere eine Ansaugvorrichtung für Wasserproben **AW** mit einem Hüllrohr **HR** und einem Saugschlauch **SL,** ein mechanischer, über Bowdenzug **BZ** (nicht sichtbar) und Rückholfeder **RF** betätigbarer Greifer **MG** als Entnahmevorrichtung für Festkörperproben **EF** mit dem zugehörigen Aufnahmekorb **AN** und eine Vermessungsvorrichtung **VV** aus zwei in einem frei wählbaren Abstand **wa** und genau parallel zueinander ausgerichteten Lasern **LR** direkt an der Videokamera **VK.** Eine ebenfalls mögliche Trennvorrichtung für Festkörperproben **TF** als mechanisch betätigbare Säge, Zange oder Messer ist nicht weiter dargestellt. Die Inspektionsgeräte **IG** sind so angeordnet, dass die Videokamera alle Aktivitäten im Sichtbereich ihrer Optik und der Bedienende volle Kontrolle über die erforderlichen Tätigkeiten hat.

**Figur 10** zeigt eine Bedieneinheit für einen Bowdenzug eines Inspektionsgeräts. Am Teleskoprohr **TS** ist eine Rastscheibe **RS** mit Rastlöchern **RL** befestigt. Zentral dazu ist eine Drahtspule **DS** drehbar mittels einer Zentralschraube **ZS** angeordnet. Die Drahtspule **DS,** die mit der Handkurbel **HK** gedreht werden kann, weist eine umlaufende Vertiefung auf, in der ein Drahtvorrat **DV** für den Bowdenzug vorhanden ist. Ein Sicherungsstift **ST** verbindet die Drahtspule **DS** mit der Rastscheibe **RS.** Bei Längenänderungen des Teleskoprohrs **TS** muss Draht ab- oder aufgewickelt werden. Dazu wird der Sicherungsstift **ST** gegen eine Zugfeder **ZF** aus seinem Rastloch **RL** herausgezogen, um 90° gedreht und so in gelöster Stellung fixiert. Die Drahtspule **DS** kann nun mit der Handkurbel **HK** gedreht werden, bis der Draht entweder gelockert ist und ein Rohrabschnitt abgenommen oder die für den Bowdenzug erforderliche neue Länge aufweist und ein Rohrabschnitt an die Teleskopstange **TS** angesetzt werden kann. Anschließend wird der Sicherungsstift **ST** wieder in das nächstgelegene Rastloch **RL** eingeführt. Zum Bedienen des jeweiligen Inspektionsgeräts wird der Sicherungsstift **ST** wieder gelöst und die Handkurbel **HK** solange betätigt, bis das Inspektionsgerät die richtige Position aufweist. Beim Rückdrehen der Handkurbel **HK** wird das Inspektionsgerät durch eine Rückholfeder bis maximal in die Ausgangstellung zurückgeführt. Zur Beibehaltung einer bestimmten Stellung des Inspektionsgeräts kann die Drahtspule **DS** in jeder vorhandenen Raststellung mit dem Sicherungsstift **ST** fixiert werden.

### Bezugszeichenliste

- **AH**: Abstandhalter
- **AL**: Ausleger
- **AK**: Auftriebskörper
- **AN**: Aufnahmekorb
- **AP**: angepasstes Profil
- **AS**: Achse
- **AW**: Ansaugvorrichtung für Wasserproben
- **BE**: Bedienungseinrichtung
- **BN**: übereinander stehende Bohrung
- **BZ**: Bowdenzug
- **DA**: Drehachse
- **dA**: konstanter Außendurchmesser
- **DL**: Drehlager
- **dl**: konstanter Innendurchmesser
- **DP**: Deckplatte
- **DS**: Drahtspule
- **EF**: Entnahmevorrichtung für Festkörperproben
- **FB**: Führungsbereich
- **FL**: Führungslasche
- **FN**: Führungsbahn
- **FS**: Führungsseil
- **FR**: Führungsrohr
- **FZ**: federnde Zunge
- **gl**: vergrößerter Innendurchmesser
- **GS**: Gleitscheibe
- **HF**: Horizontalführung
- **HK**: Handkurbel
- **HR**: Hüllrohr
- **IE**: Inspektionseinrichtung
- **IG**: Inspektionsgerät
- **KA**: Kameraachse
- **kA**: verkleinerter Außendurchmesser
- **KG**: Knickgelenk
- **KH**: Korbhalterung
- **KK**: schneidenartige Kante
- **KR**: Kreis
- **LE**: Leiteinrichtung
- **LF**: Leitflansch
- **LL**: Langlöcher
- **LO**: Leitöffnung
- **LR**: Laser
- **LS**: Längsschlitz
- **LZ**: Leitungszug
- **MA**: Manschette
- **MG**: Greifer
- **NP**: Negativprofil
- **OE**: oberes Ende
- **PB**: Profilbereich
- **PR**: Führungsrolle
- **PV**: Positioniervorrichtung
- **QB**: Querbohrung
- **QH**: quaderförmige Halterung
- **RA**: Rohrabschnitt
- **RB**: rahmenartiger Aufbau
- **RE**: Rasteinrichtung
- **RF**: Rückholfeder
- **RM**: Raumachse
- **RL**: Rastloch
- **RN**: Rastnase
- **RS**: Rastscheibe
- **SA**: Seilabschnitt
- **SE**: Schelle
- **SG**: Stange mit Griffknopf
- **SK**: Schnellklemmring
- **SL**: Saugschlauch
- **SM**: Sicherungsmutter
- **SN**: Schnellspanner
- **SP**: Sperrriegel
- **SR**: Scharnier
- **SS**: Sicherungsschraube
- **ST**: Sicherungsstift
- **TB**: Teilbereich
- **TF**: Trennvorrichtung für Festkörperproben
- **TS**: Teleskopstange
- **UE**: unteres Ende
- **VA**: verlängerte Achse
- **VB**: Verbindungsbereich
- **VF**: Vertikalführung
- **VK**: Videokamera
- **VS**: verschraubbare Strebe
- **W**: Vermessungsvorrichtung
- **WA**: Wagen
- **wa**: wählbarer Abstand
- **ZB**: zentrale Bohrung
- **ZF**: Zugfeder
- **ZP**: zentraler Punkt
- **ZS**: Zentralschraube

## Patentansprüche

1. Inspektionseinrichtung (IE) für Unterwasserstrukturen, mit einer Positioniervorrichtung (PV), die eine stufenlos verstellbare Vertikalführung (VF) mit einer Teleskopstange (TS) und eine stufenlos verstellbare Horizontalführung (HF) mit einer einen Weg vorgebenden Führungsbahn (FN) und einem darauf geführten Wagen (WA) zur Aufnahme der Vertikalführung (VF) aufweist, und mit einer Unterwasser-Videokamera (VK) als zumindest einem Inspektionsgerät (IG), das an der Teleskopstange (TS) befestigt ist, **dadurch gekennzeichnet, dass** der Wagen (WA) auf Führungsrollen (PR) geführt ist, die Teleskopstange (TS) mittels mehrerer Rohrabschnitte (RA) absatzfrei verlängerbar ist, die Führungsbahn (FN) einen veränderlich vorgebbaren Kurvenverlauf aufweist und die Führungsrollen (PR) ein das Profil der Führungsbahn (FN) aufnehmendes Negativprofil (NP) aufweisen.

2. Inspektionseinrichtung nach Anspruch 1,
**dadurch gekennzeichnet, dass** die Teleskopstange (TS) einen durchgehenden Längsschlitz (LS) zur geschützten Aufnahme von Leitungszügen (LZ) zur Versorgung und Bedienung des zumindest einen Inspektionsgerätes (IG) in ihrem Inneren aufweist.

3. Inspektionseinrichtung nach einem der Ansprüche 1 bis 2,
**dadurch gekennzeichnet, dass** die Rohrabschnitte (RA) zur Verlängerung der Teleskopstange (TS) ineinander greifen und durch federnde Rastnasen (RN) miteinander verbunden sind.

4. Inspektionseinrichtung nach einem der Ansprüche 1 bis 3,
**dadurch gekennzeichnet, dass** die den Weg des Wagens (WA) vorgebende Führungsbahn (FN) ein in der horizontalen Ebene verlaufendes, gespanntes Führungsseil (FS) ist.

5. Inspektionseinrichtung nach Anspruch 4,
**dadurch gekennzeichnet, dass** die Führungsrollen (PR) ein an verschiedene Durchmesser des Führungsseils (FS) in Stufen angepasstes Profil (AP) aufweisen, wobei Breite und Höhe der Stufen von der Achse der Führungsrolle (PR) aus nach außen hin zunehmen und die bei einem gewählten Durchmesser des Führungsseils (FS) jeweils nicht benutzten kleineren Stufen abdeckbar sind.

6. Inspektionseinrichtung nach einem der Ansprüche 1 bis 5,
**dadurch gekennzeichnet, dass** der Wagen (WA) beidseits der Führungsrollen (PR) Führungslaschen (FL) aufweist, die einen nach unten verlängerten und sich erweiternden Führungsbereich (FB) ausbilden.

7. Inspektionseinrichtung nach einem der Ansprüche 1 bis 3,
**dadurch gekennzeichnet, dass** die den Weg vorgebende Führungsbahn (FN) ein in der horizontalen Ebene geformtes Führungsrohr (FR) ist.

8. Inspektionseinrichtung nach Anspruch 7,
**dadurch gekennzeichnet, dass** der Wagen (WA) eine Deckplatte (DP) und daran angeordnet zumindest zwei Paare senkrecht links und rechts des Führungsrohrs (FR) und zumindest ein Paar waagerecht über dem Führungsrohr (FR) angeordnete, an den Durchmesser des Führungsrohrs (FR) zumindest teilweise konkav profiliert angepasste, walzenartig verbreiterte Führungsrollen (PR) aufweist.

9. Inspektionseinrichtung nach Anspruch 8,
**dadurch gekennzeichnet, dass** die walzenartig verbreiterten Führungsrollen (PR) zur Anpassung des Wagen (WA) an verschiedene Durchmesser des Führungsrohrs (FR) mit Schnellspannern (SN) an der Deckplatte (DP) in Langlöchern (LL) verschiebbar und fixierbar sind.

10. Inspektionseinrichtung nach einem der Ansprüche 8 oder 9,
**dadurch gekennzeichnet, dass** die walzenartig verbreiterten Führungsrollen (PR) in ihren Achsen unterhalb der Deckplatte (DP) ein Knickgelenk zur Anpassung des Wagen (WA) an verschiedene Durchmesser des Führungsrohrs (FR) aufweisen.

11. Inspektionseinrichtung nach einem der Ansprüche 4 bis 6,
**dadurch gekennzeichnet, dass** der Wagen (WA) durch eine Leiteinrichtung (LE) mit der Teleskopstange (TS) verbunden ist, wobei die Leiteinrichtung (LE) einen an einem Drehlager (DL) und einem Abstandhalter (AH) angeordneten, die Teleskopstange (TS) umfassenden Leitflansch (LF) und einen an der Teleskopstange (TS) in beliebiger Höhe oberhalb des Leitflanschs (LF) fixierbaren Schnellklemmring (SK) aufweist.

12. Inspektionseinrichtung nach einem der Ansprüche 7 bis 10,
**dadurch gekennzeichnet, dass** der Wagen (WA) durch eine Leiteinrichtung (LE) mit der Teleskopstange (TS) verbunden ist, wobei die Leiteinrichtung (LE) eine die Teleskopstange (TS) umfassende und mit einem Sperrriegel (SP) verschließbare Leitöffnung (LO) in der Deckplatte (DP) des Wagens (WA) und einen an der Teleskopstange (TS) in beliebiger Höhe oberhalb der Leitöffnung (LO) fixierbaren Schnellklemmring (SK) aufweist.

13. Inspektionseinrichtung nach einem der Ansprüche 1 bis 12,
**dadurch gekennzeichnet, dass** das seitlich an dem Wagen (WA) angreifende Gewicht der Teleskopstange (TS) und des daran fixierten zumindest einen Inspektionsgeräts (IG) durch einen an einem längenveränderbar ausgebildeten Auslegen (AL) an der der Führungsbahn (FN) abgewandten Seite des Wagens (WA) angeordneten Auftriebskörper (AK) kompensiert ist.

14. Inspektionseinrichtung nach einem der Ansprüche 1 bis 13,
**dadurch gekennzeichnet, dass** die als zumindest ein Inspektionsgerät (IG) vorhandene Unterwasser-Videokamera (VK) zumindest um die horizontale, einen rechten Winkel mit der optischen Kameraachse (KA) bildende Raumachse (RM) schwenkbar ist.

15. Inspektionseinrichtung nach einem der Ansprüche 1 bis 14,
**dadurch gekennzeichnet, dass** als weiteres Inspektionsgerät (IG) eine mit einem Saugschlauch (SL) versehene Ansaugvorrichtung (AV) für Wasserproben an der Teleskopstange (TS) angeordnet ist.

16. Inspektionseinrichtung nach einem der Ansprüche 1 bis 15,
**dadurch gekennzeichnet, dass** als weiteres Inspektionsgerät (IG) eine Entnahmevorrichtung für Festkörperproben (EF) an der Teleskopstange (TS) angeordnet ist.

17. Inspektionseinrichtung nach Anspruch 16,
**dadurch gekennzeichnet, dass** die Entnahmevorrichtung für Festkörperproben (EF) als Aufnahmekorb (AN) mit Korbhalterung (KH) ausgebildet ist.

18. Inspektionseinrichtung nach Anspruch 17,
**dadurch gekennzeichnet, dass** die Korbhalterung (KH) schneidenartig ausgebildete Kanten (KK) aufweist.

19. Inspektionseinrichtung nach einem der Ansprüche 17 oder 18,
**dadurch gekennzeichnet, dass** oberhalb des Aufnahmekorbes (AN) eine Trennvorrichtung für Festkörperproben (TF) an der Teleskopstange (TS) angeordnet ist.

20. Inspektionseinrichtung nach Anspruch 16,
**dadurch gekennzeichnet, dass** die Entnahmevorrichtung für Festkörperproben (EF) als mechanischer Greifer (MG) ausgebildet ist.

21. Inspektionseinrichtung einem der Ansprüche 1 bis 20,
**dadurch gekennzeichnet, dass** als weiteres Inspektionsgerät (IG) eine Vermessungsvorrichtung (VV) aus zwei in einem frei wählbaren Abstand und genau parallel zueinander ausrichtbaren Lasern (AL) an der Teleskopstange (TS) angeordnet ist.

22. Inspektionseinrichtung nach einem der Ansprüche 1 bis 21,
**dadurch gekennzeichnet, dass** die Inspektionsgeräte (IG) durch in Raststellungen von Bedienungseinrichtungen (BE) fixierbare Bowdenzüge (BZ) und Rückholfedern (RF) aufweisen.

## Claims

1. An inspection system (IE) for underwater structures, with a positioning device (PV), which comprises a continuously adjustable vertical guide (VF) with a telescopic rod (TS) and a continuously adjustable horizontal guide (HF) with a guide track (FN) which presets a path and a carriage (WA) guided on said guide track for accommodating the vertical guide (VF), and with an underwater video camera (VK) as at least one inspection appliance (IG) which is fixed to the telescopic rod (TS),
**characterised in that** the carriage (WA) is guided on guide rollers (PR), the telescopic rod (TS) can be extended without any steps by means of a plurality of tube sections (RA), the guide track (FN) has a curved course which can be variably preset and the guide rollers (PR) have a negative profile (NP) accommodating the profile of the guide track (FN).

2. The inspection system according to claim 1,
**characterised in that** the telescopic rod (TS) comprises a continuous longitudinal slot (LS) for the protected accommodation of line sections (LZ) for the supply and operation of at least one inspection appliance (IG) in its interior.

3. The inspection system according to any one of claims 1 to 2,
**characterised in that** the tube sections (RA) for extending the telescopic rod (TS) engage into one another and are connected to one another by means of spring-loaded latching noses (RN).

4. The inspection system according to any one of claims 1 to 3,
**characterised in that** the guide track (FN) which presets the path of the carriage (WA) is a taut guide cable (FS) running in the horizontal plane.

5. The inspection system according to claim 4,
**characterised in that** the guide rollers (PR) have a profile (AP) adapted in steps to different diameters of the guide cable (FS), the width and height of the steps increasing from the axis of the guide roller (PR) outwards and the smaller steps not being used with a selected diameter of the guide cable (FS) being able to be covered.

6. The inspection system according to any one of claims 1 to 5,
**characterised in that** the carriage (WA) comprises on both sides of the guide rollers (PR) guide plates (FL) which form a widening guide region (FB) extending downwards.

7. The inspection system according to any one of claims 1 to 3,
**characterised in that** the guide track (FN) which presets the path is a guide tube (FR) formed in the horizontal plane.

8. The inspection system according to claim 7,
**characterised in that** the carriage (WA) comprises a cover plate (DP) and disposed thereon at least two pairs of cylindrically widened guide rollers (FR) disposed vertically to the left and right of the guide tube (FR) and at least one pair thereof disposed horizontally above the guide tube (FR) and adapted with at least a partially concave profile to the diameter of the guide tube (FR).

9. The inspection system according to claim 8,
**characterised in that** the cylindrically widened guide rollers (PR) for adaptation of the carriage (WA) to different diameters of the guide tube (FR) are displaceable and fixable with quick-action clamps (SN) on the cover plate (DP) in elongated holes (LL).

10. The inspection system according to any one of claims 8 or 9,
**characterised in that** cylindrically widened guide rollers (PR) comprise in their axes beneath the cover plate (DP) an articulated link for adaptation of the carriage (WA) to different diameters of the guide tube (FR).

11. The inspection system according to any one of claims 4 to 6,
**characterised in that** the carriage (WA) is connected by a guide arrangement (LE) to the telescopic rod (TS), the guide arrangement (LE) comprising a guide flange (LF), disposed on a rotary bearing (DL) and a spacer (AH) and surrounding the telescopic rod (TS), and a quick-action clamping ring (SK) which can be fixed to the telescopic rod (TS) at an arbitrary height above the guide flange (LF).

12. The inspection system according to any one of claims 7 to 10,
**characterised in that** the carriage (WA) is connected by a guide arrangement (LE) to the telescopic rod (TS), the guide arrangement (LE) comprising a guide opening (LO) in the cover plate (DP) of the carriage (WA) , said guide opening surrounding the telescopic rod (TS) and being closable with a locking bolt (SP), and a quick-action clamping ring (SK) which can be fixed to the telescopic rod (TS) at an arbitrary height above the guide opening (LO).

13. The inspection system according to any one of claims 1 to 12,
**characterised in that** the weight of the telescopic rod (TS) acting laterally on the carriage (WA) and the at least one inspection appliance (IG) fixed to said telescopic rod is compensated for by a float (AK) disposed on an extension arm (AL) designed longitudinally variable on the side of the carriage (WA) facing away from the guide track (FN).

14. The inspection system according to any one of claims 1 to 13,
**characterised in that** the underwater video camera (VK) present as at least one inspection appliance (IG) can be swivelled at least about the horizontal spatial axis (RM) forming a right angle with the optical camera axis (KA).

15. The inspection system according to any one of claims 1 to 14,
**characterised in that,** as a further inspection appliance (IG), a suction arrangement (AV) provided with a suction hose (SL) for water samples is disposed on the telescopic rod (TS).

16. The inspection system according to any one of claims 1 to 15,
**characterised in that,** as a further inspection appliance (IG), a sampling device for solid samples (EF) is disposed on the telescopic rod (TS).

17. The inspection system according to claim 16,
**characterised in that** the sampling device for solid samples (EF) is designed as a pick-up basket (AN) with a basket holder (KH).

18. The inspection system according to claim 17,
**characterised in that** the basket holder (KH) has edges (KK) formed in the manner of cutting edges.

19. The inspection system according to any one of claims 17 or 18,
**characterised in that**, above the pick-up basket (AN), a separating device for solid samples (TF) is disposed on the telescopic rod (TS).

20. The inspection system according to claim 16,
**characterised in that** the sampling device for solid samples (EF) is designed as a mechanical grab (MG).

21. The inspection system according to any one of claims 1 to 20,
**characterised in that,** as a further inspection appliance (IG), a measuring arrangement (VV) comprising two lasers (AL) alignable with a freely selectable spacing and precisely parallel to one another is disposed on the telescopic rod (TS).

22. The inspection system according to any one of claims 1 to 21,
**characterised in that** the inspection appliances (IG) comprise Bowden cables (BZ) and restoring springs (BF) fixable in latching positions by means of operator devices (BE).

## Revendications

1. Dispositif d'inspection (IE) pour des structures sous-marines, comprenant un dispositif de positionnement (PV), qui comporte un guide vertical (VF) coulissant progressivement avec une tige télescopique (TS) et un guide horizontal (HF) coulissant progressivement avec une trajectoire de guidage (FN) prédéfinissant une course et un chariot (WA) guidé dessus pour la réception du guide vertical (VF), et une caméra vidéo sous-marine (VK) en tant qu'au moins un appareil d'inspection (IG), qui est fixé sur la tige télescopique (TS),
**caractérisé en ce que** le chariot (WA) est guidé sur des galets de guidage (PR), laquelle tige télescopique (TS) peut être prolongée sans déport au moyen de plusieurs parties de tube (RA), la trajectoire de guidage (FN) comporte un tracé de courbe prédéfinissable de façon variable et les galets de guidage (PR) présentent un profilé négatif (NP) recevant le profilé de la trajectoire de guidage (FN).

2. Dispositif d'inspection selon la revendication 1,
**caractérisé en ce que** la tige télescopique (TS) comporte une fente longitudinale (LS) continue pour la réception protégée de tirettes de ligne (LZ) pour l'alimentation et la commande d'au moins un appareil d'inspection (IG) dans son intérieur.

3. Dispositif d'inspection selon l'une quelconque des revendications 1 à 2,
**caractérisé en ce que** les sections de tube (RA) s'engagent les unes dans les autres pour le prolongement de la tige télescopique (TS) et sont reliées entre elles par des nez d'encliquetage (RN) élastiques.

4. Dispositif d'inspection selon l'une quelconque des revendications 1 à 3,
**caractérisé en ce que** la trajectoire de guidage (FN) prédéfinissant la course du chariot (WA) est un câble de guidage (FS) tendu et agencé dans le plan horizontal.

5. Dispositif d'inspection selon la revendication 4,
**caractérisé en ce que** les galets de guidage (PR) comportent un profilé (AP) adapté à différents diamètres du câble de guidage (FS) en niveaux, la largeur et la hauteur des niveaux augmentant depuis l'axe du galet de guidage (PR) vers l'extérieur et les niveaux plus petits, non utilisés à chaque fois pour un diamètre choisi du câble de guidage (FS) peuvent être recouverts.

6. Dispositif d'inspection selon l'une quelconque des revendications 1 à 5,
**caractérisé en ce que** le chariot (WA) comporte des deux côtés des galets de guidage (PR) des pattes de guidage (FL) qui forment une zone de guidage (FB) prolongée et s'étendant vers le bas.

7. Dispositif d'inspection selon l'une quelconque des revendications 1 à 3,
**caractérisé en ce que** la trajectoire de guidage (FN) prédéfinissant la course est un tuyau de guidage (FR) formé dans le plan horizontal.

8. Dispositif d'inspection selon la revendication 7,
**caractérisé en ce que** le chariot (WA) comporte une plaque de recouvrement (DP) et disposées dessus au moins deux paires verticalement à gauche et à droite du tube de guidage (FR) et au moins une paire de galets de guidage (PR) disposés horizontalement au-dessus du tube de guidage (FR), adaptés avec un profilé au moins partiellement concave au diamètre du tube de guidage (FR) et élargis en forme de cylindre.

9. Dispositif d'inspection selon la revendication 8,
**caractérisé en ce que** les galets de guidage (PR) élargis en forme de cylindre peuvent coulisser et être fixés pour l'adaptation du chariot (WA) à différents diamètres du tube de guidage (FR) avec des tendeurs rapides (SN) sur la plaque de recouvrement (DP) dans des trous oblongs (LL).

10. Dispositif d'inspection selon l'une quelconque des revendications 8 ou 9,
**caractérisé en ce que** les galets de guidage (PR) élargis en forme de cylindre comportent dans leurs axes au-dessous de la plaque de recouvrement (DP) une articulation pliée pour l'adaptation du chariot (WA) à différents diamètres du tube de guidage (FR).

11. Dispositif d'inspection selon l'une quelconque des revendications 4 à 6,
**caractérisé en ce que** le chariot (WA) est relié par un dispositif de guidage (LE) à la tige télescopique (TS), le dispositif de guidage (LE) comportant une bride de guidage (LF) disposée sur un palier rotatif (DL) et un écarteur (AH) et comprenant la tige télescopique (TS) et une bague de serrage rapide (SK) pouvant être fixée sur la tige télescopique (TS) à une hauteur quelconque au-dessus de la bride de guidage (LF).

12. Dispositif d'inspection selon l'une quelconque des revendications 7 à 10,
**caractérisé en ce que** le chariot (WA) est relié par un dispositif de guidage (LE) à la tige télescopique (TS), le dispositif de guidage (LE) comprenant une ouverture de guidage (LO) comportant la tige télescopique (TS) et pouvant être fermée avec un verrou de blocage (SP) dans la plaque de recouvrement (DP) du chariot (WA) et une bague de serrage rapide (SK) pouvant être fixée sur la tige télescopique (TS) à une hauteur quelconque au-dessus de l'ouverture de guidage (LO).

13. Dispositif d'inspection selon l'une quelconque des revendications 1 à 12,
**caractérisé en ce que** le poids, s'appliquant sur le côté du chariot (WA), de la tige télescopique (TS) et du au moins un appareil d'inspection (IG) fixé dessus est compensé par un flotteur (AK) disposé sur une flèche (AL) réalisée de façon variable en longueur sur le côté, opposé à la trajectoire de guidage (FN), du chariot (WA).

14. Dispositif d'inspection selon l'une quelconque des revendications 1 à 13,
**caractérisé en ce que** la caméra vidéo sous-marine (VK) présente en tant qu'au moins un appareil d'inspection (IG) peut basculer au moins autour de l'axe d'espace (RM) horizontal et formant un angle droit avec l'axe de caméra (KA) optique.

15. Dispositif d'inspection selon l'une quelconque des revendications 1 à 14,
**caractérisé en ce qu'**un dispositif d'aspiration (AV) doté d'un flexible d'aspiration (SL) est disposé comme autre appareil d'inspection (IG) pour des échantillons d'eau sur la tige télescopique (TS).

16. Dispositif d'inspection selon l'une quelconque des revendications 1 à 15,
**caractérisé en ce qu'**un dispositif de prélèvement pour des échantillons de solide (EF) est disposé sur la tige télescopique (TS) comme autre appareil d'inspection (IG).

17. Dispositif d'inspection selon la revendication 16,
**caractérisé en ce que** le dispositif de prélèvement pour des échantillons de solide (EF) est conçu comme corbeille de réception (AN) avec support de corbeille (KH).

18. Dispositif d'inspection selon la revendication 17,
**caractérisé en ce que** le support de corbeille (KH) présente des arêtes (KK) conçues à la façon de lames.

19. Dispositif d'inspection selon l'une quelconque des revendications 17 ou 18,
**caractérisé en ce qu'**un dispositif de séparation pour des échantillons de solide est disposé sur la tige télescopique (TS) au-dessus de la corbeille de réception (AN).

20. Dispositif d'inspection selon la revendication 16,
**caractérisé en ce que** le dispositif de prélèvement pour des échantillons de solide (EF) est conçu comme grappin mécanique (MG).

21. Dispositif d'inspection selon l'une quelconque des revendications 1 à 20,
**caractérisé en ce qu'**un dispositif de mesurage (VV) constitué de deux lasers (AL) pouvant être orienté avec une distance pouvant être choisie librement et de façon exactement parallèle entre eux est disposé sur la tige télescopique (TS) comme autre appareil d'inspection.

22. Dispositif d'inspection selon l'une quelconque des revendications 1 à 21,
**caractérisé en ce que** les appareils d'inspection (IG) présente des câbles bowden (BZ) et des ressorts de rappel (RF) pouvant être fixés dans positions d'encliquetage de dispositifs de commande (BE).
